(19) Europäisches Patentamt
European Patent Office
Office européen des brevets

(11) **EP 3 597 498 B1**

(12) **EUROPEAN PATENT SPECIFICATION**

(45) Date of publication and mention
of the grant of the patent:
**29.03.2023 Bulletin 2023/13**

(21) Application number: **17843737.2**

(22) Date of filing: **25.08.2017**

(51) International Patent Classification (IPC):
**B60K 6/445** (2007.10)    **B60K 6/365** (2007.10)
**B60W 20/00** (2006.01)    **B60W 10/08** (2006.01)
**B60W 10/06** (2006.01)    **B60W 10/26** (2006.01)
**B60W 50/00** (2006.01)

(52) Cooperative Patent Classification (CPC):
**B60K 6/445; B60K 6/365; B60L 3/003;
B60L 15/20; B60L 50/15; B60L 50/16; B60L 50/61;
B60W 10/06; B60W 10/08; B60W 10/26;
B60W 20/00;** B60L 2210/40; B60L 2240/423;
B60L 2240/527; B60L 2240/547;          (Cont.)

(86) International application number:
**PCT/JP2017/030584**

(87) International publication number:
**WO 2018/038261 (01.03.2018 Gazette 2018/09)**

(54) **VEHICLE SYSTEM**

FAHRZEUGSYSTEM

SYSTÈME DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2016   JP 2016164756**

(43) Date of publication of application:
**22.01.2020   Bulletin 2020/04**

(73) Proprietors:
• **Kabushiki Kaisha Toshiba
Minato-ku
Tokyo 105-8001 (JP)**
• **Toshiba Infrastructure Systems &
Solutions Corporation
Kawasaki-shi, Kanagawa 212-8585 (JP)**

(72) Inventors:
• **SHIMIZU, Yosuke
Tokyo 105-8001 (JP)**
• **KUWANO, Yuuki
Tokyo 105-8001 (JP)**

(74) Representative: **AWA Sweden AB
Junkersgatan 1
582 35 Linköping (SE)**

(56) References cited:
**JP-A- 2007 068 301      JP-A- 2007 068 301
JP-A- 2013 060 041      JP-A- 2013 060 041
US-A1- 2015 321 664**

(52) Cooperative Patent Classification (CPC): (Cont.)
B60W 2050/001; B60W 2050/0048;
B60W 2710/083; Y02T 10/62; Y02T 10/64;
Y02T 10/70; Y02T 10/7072; Y02T 10/72

**Description**

FIELD

Embodiments of the present invention relates to a vehicle system.

BACKGROUND

Hybrid vehicle systems configured to be able to transmitting both energy supplied from an internal combustion engine and an energy supplied from a rechargeable battery to an axle are proposed.

A series parallel hybrid vehicle system includes a tri-axis power transmission mechanism configured to transmit energy supplied from an internal combustion engine to a power generator side and to an axle side. In the series parallel hybrid vehicle system, the axle rotates by using electric energy supplied from the internal combustion engine via the tri-axis power transmission mechanism to the axle and electric energy supplied from the power generator, and energy supplied from the rechargeable battery.

In the series parallel hybrid vehicle system, a speed of the axle (vehicle speed) and a rotational speed of the internal combustion engine may be determined independently. In the series parallel hybrid vehicle system, an output torque of the vehicle and an output of the internal combustion engine may be determined independently. Accordingly, an operating point of the internal combustion engine may be determined irrespective of an operating state of the vehicle, so that a high efficient operation of the internal combustion engine is enabled by selecting the operating point of the internal combustion engine at a point that achieves a high efficiency, and fuel economy is improved.

In addition, when the energy output from the internal combustion engine is different from the energy output from the vehicle, excess or shortage of the energy may be adjusted by charging or discharging the rechargeable battery connected to a direct-current link.

JP 2013060041 A relates to a hybrid vehicle and a control method thereof. JP 2007068301 A relates to a control device for electric vehicle. US 20150321664 A1 relates to an emergency operation method of hybrid vehicle.

CITATION LIST

PATENT LITERATURE

PATENT LITERATURE 1: Japanese Patent No. 3050125

SUMMARY

A series parallel hybrid vehicle system includes, for example, an inverter configured to drive a power generator; an inverter configured to drive a motor; a direct-current link connecting the two inverters; a rechargeable battery connected to the direct-current link, and an auxiliary machine configured to receive a supply of power from the direct-current link.

When the direct-current link and the battery were electrically disconnected in case of, for example, an occurrence of a failure in the battery, a voltage of the direct-current link varied in conjunction with a variation of energy consumed by the auxiliary machine, and thus it was difficult to drive the inverter stably. In addition, when the operation of the inverter became unstable, the entire vehicle system sometimes stopped.

Further, in order to avoid deterioration of the battery, a vehicle system capable of achieving a stable operation even in a state in which the battery is disconnected from the direct-current link has been desired.

Embodiments described herein have been made in view of the above-mentioned circumstances, and it is an object of the embodiments to provide a vehicle system capable of achieving a stable drive.

The invention is defined by the appended claims.

BRIEF DESCRIPTION OF THE DRAWINGS

FIG. 1 is a drawing schematically illustrating a configuration example of a vehicle system.
FIG. 2 is a drawing for explaining a configuration example of a first power transmission mechanism of the vehicle system illustrated in FIG. 1.
FIG. 3 is a block diagram schematically illustrating a configuration example of a vehicle control apparatus illustrated in FIG. 1.
FIG. 4 is a block diagram schematically illustrating a configuration example of a constant direct-current voltage control section illustrated in FIG. 3.

FIG. 5 is a block diagram schematically illustrating a configuration example of a vehicle control apparatus of a vehicle system according to a first embodiment.

FIG. 6 is a block diagram schematically illustrating a configuration of a vehicle control apparatus of a vehicle system according to a second embodiment.

FIG. 7 is a block diagram schematically illustrating another configuration example of the vehicle control apparatus of the vehicle system according to the second embodiment.

DETAILED DESCRIPTION

Referring now to the drawings, a configuration example of a vehicle system will be described.

The vehicle system of the present example includes: an internal combustion engine 10; a first power transmission mechanism 20; a power generator (first electric motor) 30; a first inverter 40; a second inverter 50; a motor (second electric motor) 60; a second power transmission mechanism 70; an axle 80; an auxiliary machine 90; a wheel WL, a vehicle control apparatus CTR; and a voltage detector VS.

The internal combustion engine 10 is an engine configured to generate mechanical energy for driving the vehicle such as a gasoline engine and a diesel engine.

The first power transmission mechanism 20 is a tri-axis power transmission mechanism configured to transmit a revolution of the internal combustion engine 10 both to the power generator side 30 and the wheel WL side (axle 80 side), and distribute mechanical energy generated by the internal combustion engine 10 into energy supplied to the power generator 30 side and energy supplied to the wheel WL side (axle 80 side).

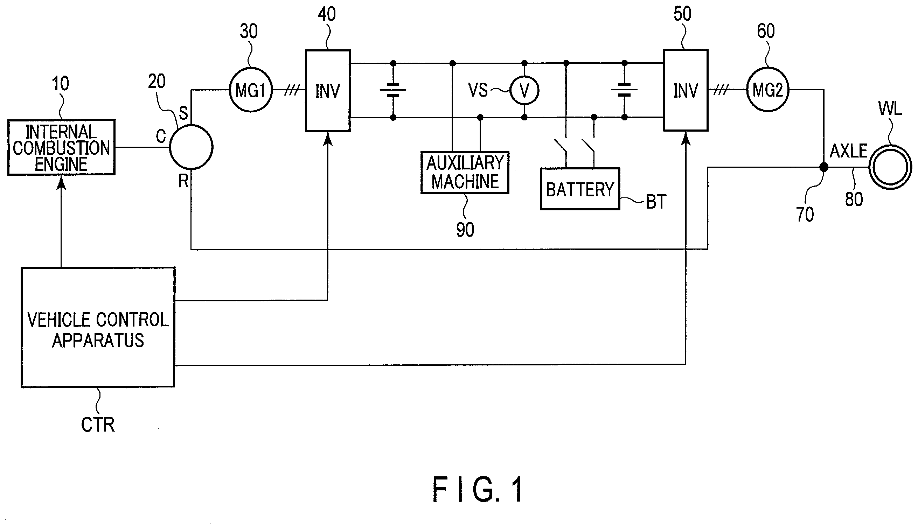

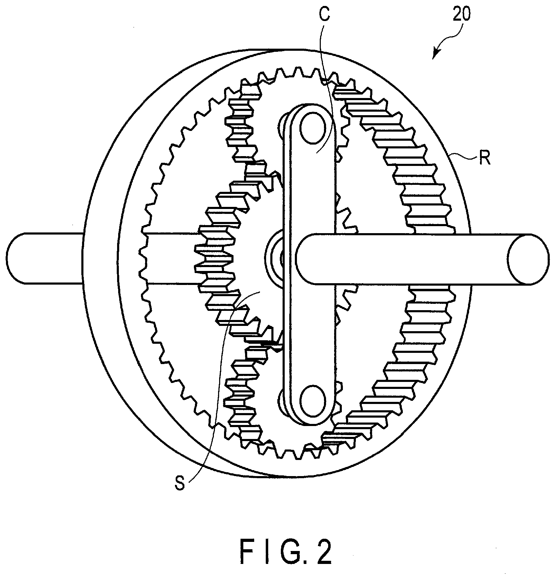

FIG. 2 is a drawing for explaining a configuration example of the first power transmission mechanism of the vehicle system illustrated in FIG. 1.

The first power transmission mechanism 20 is, for example, an epicyclic gear, and includes a sun gear S, a planetary gear P circumscribing the sun gear S, a ring gear R inscribed by the planetary gear P, and a planetary carrier C configured to turn along a trajectory of the planetary gear P. In the present example, the planetary carrier C is rotated by mechanical energy Pe generated by the internal combustion engine 10. A rotative power of the sun gear S is transmitted to the power generator 30. A rotative power of the ring gear R is transmitted to the second power transmission mechanism 70 connected to the axle 80.

Equations of motion of the sun gear S, the ring gear R, the planetary gear P and the planetary carrier C of the first power transmission mechanism 20 are given below.

Note that, in these equations, θ is a rotation angle of the gear, the electric motor, and the like, ω is a rotation angular speed of the gear, the electric motor, and the like, T is a torque of the gear, the electric motor, and the like, J is an inertia of the gear, the electric motor, and the like, and G is a number of gear teeth. Suffixes of the above-descried signs are such that S relates to the sun gear, P relates to the planetary gear, C relates to the planetary carrier, and R relates to the ring gear.

[Mathematical 1]

$$J_S \ddot{\theta}_S = T_S + \lambda_1 \quad (1)$$

$$J_P \ddot{\theta}_P = \frac{G_P}{G_S} \lambda_1 - \frac{G_P}{G_R} \lambda_2 \quad (2)$$

$$J_C \ddot{\theta}_C = T_C - \frac{G_S + G_P}{G_S} \lambda_1 - \frac{G_R - G_P}{G_R} \lambda_2 \quad (3)$$

$$J_R \ddot{\theta}_R = T_R + \lambda_2 \quad (4)$$

Note that a condition of constraint in the above equations of motion is given below.

[Mathematical 2]

$$G_S \theta_S + G_R \theta_R = (G_S + G_R)\theta_C \quad (5)$$

$\lambda_1$: Sun gear torque generated in the planet gear owing to other axis
$\lambda_2$: Ring gear torque generated in the planet gear owing to other axis

Assuming that inertias of the sun gear S, the internal combustion engine 10, and the planetary gear P are negligibly small with respect to an inertial mass of the vehicle, equations of motion may be expressed as below. [Mathematical 3]

$$0 = T_S + \lambda_1 \quad (6)$$

$$0 = \frac{G_P}{G_S} \lambda_1 - \frac{G_P}{G_R} \lambda_2 \quad (7)$$

$$0 = T_C - \frac{G_S + G_P}{G_S} \lambda_1 - \frac{G_R - G_P}{G_R} \lambda_2 \quad (8)$$

The power generator 30 converts the mechanical energy Pg supplied to the sun gear S of the first power transmission mechanism 20 into electric energy. The power generator 30 is, for example, an electric motor provided with a rotor moving in conjunction with the sun gear S and a stator, and outputs a three-phase alternate-current power.
The first inverter 40 is control means configured to control an operation of the power generator 30, and converts the three-phase alternate-current power output from the power generator 30 into a direct-current power to cause a regeneration operation and converts the direct-current power supplied from the direct-current link into a three-phase alternate-current power and supplies the converted direct-current power to the power generator 30 to cause the power generator 30 to perform a power-run operation. The first inverter 40 is connected to the second inverter 50 and a battery BT via the direct-current link. A capacitor is connected to a direct-current side of the first inverter 40.
The second inverter 50 converts the direct-current power supplied from the direct-current link into an alternate-current power and outputs the converted alternate-current power to the motor 60. The second inverter 50 converts the alternate-current power supplied from the motor 60 into the direct-current power and outputs the direct-current power to the direct-current link. A capacitor is connected to a direct-current side of the second inverter 50.
A voltage detector VS detects a voltage of the direct-current link. A direct-current voltage (link voltage) $V_{DC}$ detected by the voltage detector VS is supplied to the vehicle control apparatus CTR.
The motor 60 is an electric motor driven by an alternate-current power supplied from the second inverter 50, and is configured to convert electric energy into a mechanical energy Pm and output the mechanical energy Pm to the second power transmission mechanism 70.
The second power transmission mechanism 70 is capable of transmitting a revolution between the second inverter 50 and the axle 80, and between the first power transmission mechanism 20 and the axle 80. In other words, the second power transmission mechanism 70 is capable of transmitting energy Pout, which is the mechanical energy mechanical energy transmitted from the internal combustion engine 10 via the ring gear R combined with the mechanical energy supplied from the second inverter 50 to the axle 80. The second power transmission mechanism 70 is also capable of transmitting a revolution of the axle 80 to the ring gear R and the second inverter 50. The wheel WL is driven to rotate via the axle 80.
The battery BT includes, for example, a rechargeable battery including a plurality of secondary battery cells, and is configured to be rechargeable with electric power supplied from the direct-current link and is capable of discharging electric power to the direct-current link.
The auxiliary machine 90 is, for example, a load mounted in the vehicle, such as an illuminating apparatus. The auxiliary machine 90 is connected to the battery BT, the first inverter 40 and the second inverter 50 via the direct-current link, and is driven by energy supplied from the direct-current link.
The vehicle control apparatus CTR is a control section configured to control the internal combustion engine 10, the power generator 30, the first inverter 40, the second inverter 50, the motor 60, and the battery BT to operate in conjunction with each other. The vehicle control apparatus CTR is, for example, computing means provided with a processor such as a central processing unit (CPU), a micro processing unit (MPU), or the like and a memory.

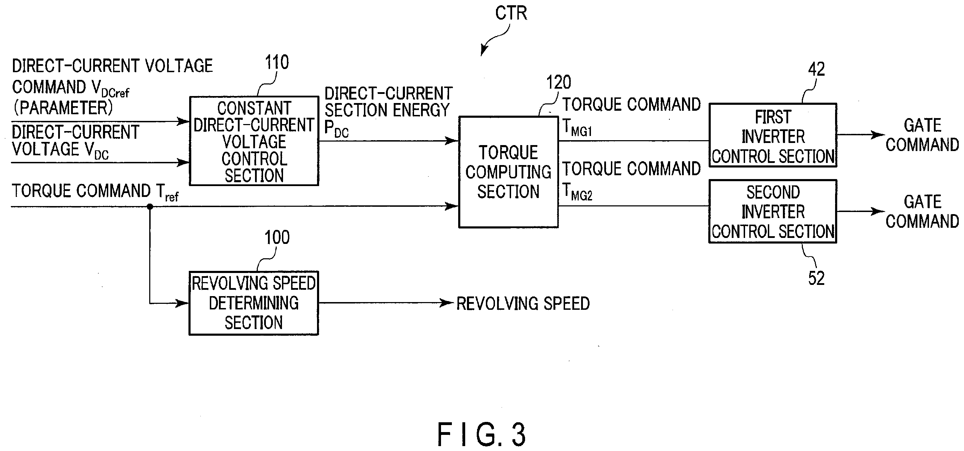

FIG. 3 is a block diagram schematically illustrating a configuration example of a vehicle control apparatus CTR illustrated in FIG. 1.
Note that in the following description, a suffix "E" is added to values relating to the internal combustion engine 10, a suffix "MG1" is added to values relating to the power generator 30, and a suffix "MG2" is added to values relating to the motor 60.

The vehicle control apparatus CTR includes a revolving speed determining section 100, a constant direct-current voltage control section 110; a torque computing section 120, a first inverter control section 42, and a second inverter control section 52.

The revolving speed determining section 100 is provided, for example, with a table storing revolving speeds of the internal combustion engine 10 corresponding to output torques of the axle 80. The revolving speed determining section 100 receives an output torque command (axle torque command) Tref of the axle supplied from outside, and reads and outputs the revolving speed of the internal combustion engine 10 corresponding to the axle torque command Tref.

The constant direct-current voltage control section 110 receives a direct-current voltage command (link voltage command) $V_{DCref}$ and a direct-current voltage $V_{DC}$, computes and outputs a value of a direct-current section energy $P_{DC}$ that makes a difference between the value of the link voltage command $V_{DCref}$ and the value of the direct-current voltage $V_{DC}$ zero.

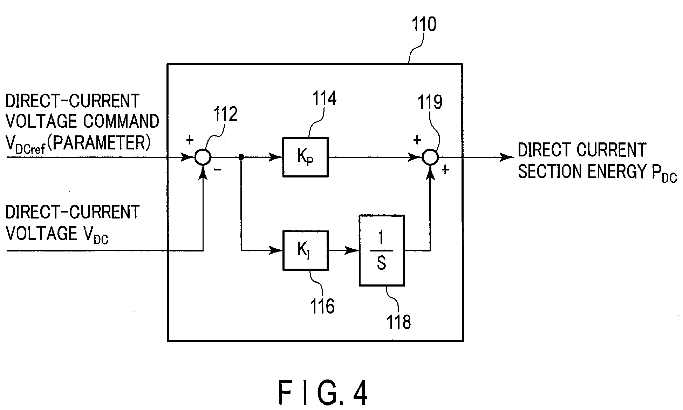

FIG. 4 is a block diagram schematically illustrating a configuration example of a constant direct-current voltage control section illustrated in FIG. 3.

The constant direct-current voltage control section 110 includes a subtractor 112, a proportional gain multiplier 114, an integration gain multiplier 116, an integrator 118, and an adder 119.

The link voltage command $V_{DCref}$ and the direct-current voltage $V_{DC}$ are input to the subtractor 112, and a difference obtained by subtracting the direct-current voltage $V_{DC}$ from the link voltage command $V_{DCref}$ is output to a proportional gain multiplier 114 and the integration gain multiplier 116.

The proportional gain multiplier 114 multiplies the input difference value $(V_{DCref} - V_{DC})$ by a proportional gain Kp and output the obtained value to the adder 119.

The integration gain multiplier 116 multiplies the input difference value $(V_{DCref} - Voc)$ by an integration gain KI and output the obtained value to the integrator 118.

The integrator 118 integrates the value $(KI \times (V_{DCref} - V_{DC}))$ input from the integration gain multiplier 116 and outputs the obtained value to the adder 119.

The adder 119 adds a value $(Kp \times (V_{DCref} - V_{DC}))$ from the proportional gain multiplier 114 and a value $(KI \times (V_{DCref} - V_{DC})/s)$ input from the integrator and output a result as the direct-current section energy $P_{DC}$.

The torque computing section 120 receives the direct-current section energy $P_{DC}$ and the axle torque command Tref and computes a torque command $T_{MG1}$ of the power generator 30 and the torque command $T_{MG2}$ of the motor 60 so that the output torque of the axle 80 realizes the axle torque command Tref and the voltage of the direct-current link becomes constant.

The torque command $T_{MG1}$, $T_{MG2}$ computed by the torque computing section 120 will be described below.

Since the power generator 30 is connected to the sun gear S of the first power transmission mechanism 20, a torque Ts generated in the sun gear S is equivalent to the torque $T_{MG1}$ generated in the power generator 30 (equation (9)). In view of such circumstances, the following equation (10) will be established from a relationship between the above described equation (6) and equation (7).

[Mathematical 4]

$$T_S = T_{MG1} \quad (9)$$

$$\frac{T_{MG1}}{G_S} + \frac{\lambda_2}{G_R} = 0 \quad (10)$$

A torque $T_{OUT}$ output from the axle 80 is a sum of a torque λ2 generating in the ring gear R of the first power transmission mechanism 20 and the torque $T_{MG2}$ generating in the motor 60, and is expressed by the following equation (11).

[Mathematical 5]

$$T_{OUT} = \lambda_2 + T_{MG2}$$
$$= -\frac{G_R}{G_S} T_{MG1} + T_{MG2} \quad (11)$$

Assuming that the rotation of the respective gears of the first power transmission mechanism 20 have a constant speed, a torque Tc generating in the internal combustion engine 10 (carrier C) is expressed by the following equation (12) based on the above equations (6), (8) and (9).

[Mathematical 6]

$$T_C = \frac{G_S + G_P}{G_S}(-T_{MG1}) + \frac{G_R - G_P}{G_R}\lambda_2 \quad (12)$$

In addition, based on the relationship with the above-described equation (10), the following equation (13) is established.

[Mathematical 7]

$$T_C = \frac{G_S + G_P}{G_S}(-T_{MG1}) + \frac{G_R - G_P}{G_R}\left(-\frac{G_R}{G_S}T_{MG1}\right)$$
$$= -\frac{G_S + G_R}{G_S}T_{MG1} \quad (13)$$

From the above equation (13), it is understood that the load of the internal combustion engine 10 is determined by the torque $T_{MG1}$ of the power generator 30.

On the other hand, the relationship among energy ($=\omega s \cdot T_{MG1}$) consumed by the power generator 30, energy ($=\omega_R \cdot T_{MG2}$) consumed by the motor 60, and energy (direct-current section energy $P_{DC}$) consumed by the battery BT, the auxiliary machine 90, or the like in the direct-current link is expressed by the following equation (14).

[Mathematical 8]

$$\omega_S T_{MG1} + \omega_R T_{MG2} + P_{DC} = 0 \quad (14)$$

When the respective values in the respective members of the above equation (14) are negative values, it means that the power generator 30 and the motor 60 generate electricity, and the battery BT is charged.

From the above equations (11) and (14), where energy supplied to the direct-current link is the direct-current section energy $P_{DC}$, the torques $T_{MG1}$ and $T_{MG2}$ for obtaining a torque $T_{OUT}$ output from the axle is set up as the following equations (15) and (16).

[Mathematical 9]

$$T_{MG1} = \frac{G_S(-\omega_R T_{out} - P_{DC})}{G_S\omega_S + G_R\omega_R} \quad (15)$$

$$T_{MG2} = \frac{G_S\left(\omega_S T_{out} - \frac{G_R}{G_S}P_{DC}\right)}{G_S\omega_S + G_R\omega_R} \quad (16)$$

Since the output torque $T_{OUT}$ of the axle and the direct-current section energy $P_{DC}$ can be determined independently by the equations (15) and (16), the axle torque $T_{OUT}$ may be changed to a desired value while maintaining the direct-current link voltage constant by setting the direct-current section energy $P_{DC}$ to be equivalent to energy consumed by the auxiliary machine 90.

However, the amount of energy consumed by the auxiliary machine 90 is inconstant and control with high degree of accuracy is difficult by being affected by a detection error or the like even when the energy consumed by the auxiliary machine 90 is detectable. Therefore, in the present example, the direct-current link voltage is made a constant value by using the value computed by the constant direct-current voltage control section 110 is the direct-current section energy $P_{DC}$.

In other words, when the equations (15) and (16) are expressed with the axle torque $T_{OUT}$ and the direct-current section energy $P_{DC}$ separated into different members, the following equations (17) and (18) are obtained.

[Mathematical 10]

$$T_{MG1} = -\frac{G_S\omega_R}{G_S\omega_S + G_R\omega_R}T_{OUT} - \frac{G_S}{G_S\omega_S + G_R\omega_R}P_{DC} \quad (17)$$

7

$$T_{MG2} = \frac{G_S\omega_S}{G_S\omega_S + G_R\omega_R}T_{OUT} - \frac{G_R}{G_S\omega_S + G_R\omega_R}P_{DC} \qquad (18)$$

The torque command $T_{MG1}$ of the power generator 30 is a sum of "-" of a first operand and "-" of a second operand, in which the first operand is obtained by dividing a product of the number of teeth Gs of the sun gear S, the rotation angular speed $\omega_R$ of the ring gear R, and the axle torque command $T_{OUT}$ by a sum of a product of the number of teeth Gs of the sun gear S and the rotation angular speed $\omega_S$ of the sun gear S and a product of the number of teeth $G_R$ of the ring gear R and the rotation angular speed $\omega_R$ of the ring gear R, and the second operand is obtained by dividing a product of the number of teeth Gs of the sun gear S and the direct-current section energy $P_{DC}$ by a sum of a product of the number of teeth Gs of the sun gear S and the rotation angular speed $\omega_S$ of the sun gear S and a product of the number of teeth $G_R$ of the ring gear R and the rotation angular speed $\omega_R$ of the ring gear R.

The torque command $T_{MG2}$ of the motor 60 is a sum of a third operand and "-" of a fourth operand, in which the third operand is obtained by dividing a product of the number of teeth Gs of the sun gear S, the rotation angular speed $\omega_S$ of the sun gear S, and the axle torque command $T_{OUT}$ by a sum of a product of the number of teeth Gs of the sun gear S and the rotation angular speed $\omega_S$ of the sun gear S and a product of the number of teeth $G_R$ of the ring gear R and the rotation angular speed $\omega_R$ of the ring gear R, and the fourth operand is obtained by dividing a product of the number of teeth $G_R$ of the ring gear R and the direct-current section energy $P_{DC}$ by a sum of a product of the number of teeth Gs of the sun gear S and the rotation angular speed $\omega_S$ of the sun gear S and a product of the number of teeth $G_R$ of the ring gear R and the rotation angular speed $\omega_R$ of the ring gear R.

In the above equations (17) and (18), by assigning the axle torque $T_{OUT}$ to the value of the axle torque Tref, the voltage of the direct-current link may be maintained constant while achieving the axle torque $T_{OUT}$ conforming to the axle torque command Tref.

[Mathematical 11]

$$T_{MG1} = -\frac{G_S\omega_R}{G_S\omega_S + G_R\omega_R}T_{ref} - \frac{G_S}{G_S\omega_S + G_R\omega_R}P_{DC} \quad (19)$$

$$T_{MG2} = \frac{G_S\omega_S}{G_S\omega_S + G_R\omega_R}T_{ref} - \frac{G_S}{G_S\omega_S + G_R\omega_R}P_{DC} \quad (20)$$

The first inverter control section 42 receives the torque command $T_{MG1}$ from the torque computing section 120, performs control (vector control or the like) for outputting a torque of the torque command $T_{MG1}$, and generates and outputs a gate command to the first inverter 40.

The second inverter control section 52 receives the torque command $T_{MG2}$ from the torque computing section 120, performs control (vector control or the like) for outputting a torque of the torque command $T_{MG2}$, and generates and outputs a gate command to the second inverter 50.

The first inverter 40 and the second inverter 50 are operated by the gate command generated in a manner descried above. Therefore, even when the battery BT is not connected to the direct-current link, the direct-current link voltage is maintained constant, and an output torque $T_{OUT}$ that achieves the axle torque command Tref set as desired may be output from the axle 80. In other words, according to the vehicle system of the present example, a stable drive is achieved.

Next, a vehicle system of a first embodiment will be described with reference to the drawings.

Note that, in the following description, the same configurations as in the example described above will be denoted by the same reference numerals and description will be omitted.

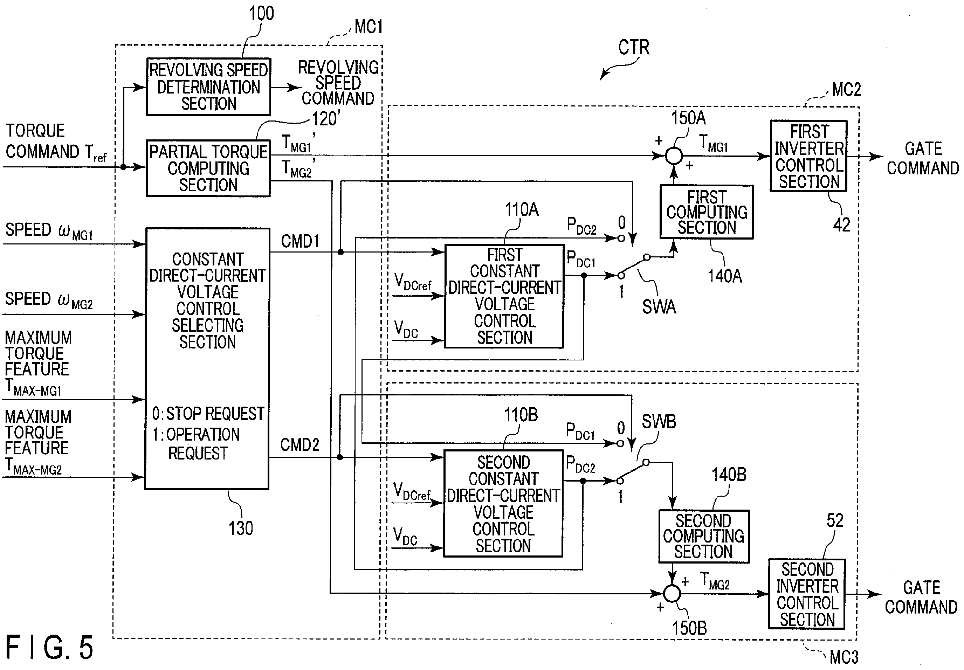

FIG. 5 is a block diagram schematically illustrating a configuration example of a vehicle control apparatus of a vehicle system according to the first embodiment.

In the present embodiment, a vehicle control apparatus CTR includes a plurality of processors, and a power generator control section MC2 configured to control a power generator 30, a motor control section MC3 configured to control a motor 60, and a master control section MC1 are operated by different processors. The master control section MC1 is configured to be capable of communicating with both the power generator control section MC2 and the motor control section MC3. The power generator control section MC2 and the motor control section MC3 cannot communicate with each other. The power generator control section MC2 and the motor control section MC3 can communicate with each other via communication means (not illustrated) of the master control section MC1. In the present embodiment, a configuration of controlling the power generator 30 and the motor 60 in cooperation with each other by the plurality of processors as described above will be described.

In the present embodiment, a vehicle control apparatus CTR further includes a constant direct-current voltage control selecting section 130 configured to select a power generator for controlling a voltage of a direct-current link based on a rotation angular speed $\omega_{MG1}$ of the power generator (first electric motor) 30 and a rotation angular speed $\omega_{MG2}$ of the motor (second electric motor) 60, and output a first control signal CMD1 that is at a first level (=1) when controlling the voltage of the direct-current link by an operation of the power generator 30 and a second control signal CMD2 that is at a first level (=1) when controlling the voltage of the direct-current link by an operation of the motor 60. For example, when controlling the voltage of the direct-current link by the action of the power generator 30, the first control signal CMD1 is "1" and the second control signal CMD2 is "0" (a second level different from the first level). When controlling the voltage of the direct-current link by the operation of the motor 60, the first control signal CMD1 is "0" (second level) and the second control signal CMD2 is "1".

As described above, in the present embodiment, the voltage of the direct-current link is controlled to be constant based on an output signal from either a first constant direct-current voltage control section 110A or a second constant direct-current voltage control section 110B, and thus the first control signal CMD1 and the second control signal CMD2 are exclusively "1". For example, when both of the first constant direct-current voltage control section 110A and the second constant direct-current voltage control section 110B perform the constant voltage control of the direct-current link, a control section that controls the voltage of the direct-current link to rise and a control section that controls the voltage of the direct-current link to drop are created due to errors in sensors and circuits, which may cause a failure in operation of the first constant direct-current voltage control section 110A and the second constant direct-current voltage control section 110B.

As an exception, when the entire vehicle system is stopped, the first control signal CMD1 and the second control signal CMD2 are zero (=0). When the vehicle system is stopped, an inverter control section stops an output of a gate command, and a stop sequence is activated, so that the voltage of the direct-current link is stabilized at zero (=0).

The constant direct-current voltage control section 110 includes the first constant direct-current voltage control section (first control section) 110A, the second constant direct-current voltage control section (second control section) 110B, a first switch SWA, and a second switch SWB.

The first constant direct-current voltage control section 110A receives, for example, the first control signal CMD1, an link voltage command $V_{DCref}$, and a direct-current voltage $V_{DC}$, and computes and outputs a direct-current section energy $P_{DC1}$ when the value of the first control signal CMD1 is at a first level (=1). When the value of the first control signal CMD1 is at a second level (=0), an output $P_{DC1}$ of the first constant direct-current voltage control section 110A is, for example, zero.

Note that, when the CMD1 is zero (CMD1 = 0), the output $P_{DC1}$ from the first constant direct-current voltage control section 110A is not used in any configuration. Therefore, the output $P_{DC1}$ does not affect an operation of other configuration irrespective of the value of the output $P_{DC1}$ and thus may be set to values other than zero. In addition, the first constant direct-current voltage control section 110A may be configured to receive the link voltage command $V_{DCref}$ and the direct-current voltage $V_{DC}$, and compute and output the direct-current section energy $P_{DC1}$. In other words, when the value of the first control signal CMD1 is at a second level (=0), the direct-current section energy $P_{DC1}$ is not used in any configuration by the first switch SWA, described later, being switched. Therefore, the first constant direct-current voltage control section 110A may be configured to compute and output the direct-current section energy $P_{DC1}$ irrespective of the first control signal CMD1.

The second constant direct-current voltage control section 110B receives, the second control signal CMD2, an link voltage command $V_{DCref}$, and a direct-current voltage $V_{DC}$, and computes and outputs a direct-current section energy $P_{DC2}$ when the value of the second control signal CMD2 is at a first level (=1). When the value of the second control signal CMD2 is at a second level (=0), an output $P_{DC2}$ of the second constant direct-current voltage control section 110B is, for example, zero.

Note that, when the CMD2 is zero (=0), the output $P_{DC2}$ from the second constant direct-current voltage control section 110B is not used in any configuration. Therefore, the output $P_{DC2}$ does not affect an operation of other configuration irrespective of the value of the output $P_{DC2}$ and thus may be set to values other than zero. In addition, the second constant direct-current voltage control section 110B may be configured to receive the link voltage command $V_{DCref}$ and the direct-current voltage $V_{DC}$, and compute and output the direct-current section energy $P_{DC2}$. In other words, when the value of the second control signal CMD2 is at a second level (=0), the direct-current section energy $P_{DC2}$ is not used in any configuration by a second switch SWB, described later, being switched. Therefore, the second constant direct-current voltage control section 110B may be configured to compute and output the direct-current section energy $P_{DC2}$ irrespective of the second control signal CMD2.

In the first switch SWA, an output $P_{DC1}$ of the first constant direct-current voltage control section 110A is input to a first input terminal, and an output $P_{DC2}$ of the second constant direct-current voltage control section 110B is input to a second input terminal. The first switch SWA connects the first input terminal and an output terminal when the first control signal CMD1 is at the first level (=1). The first switch SWA connects the second input terminal and the output terminal when the first control signal CMD1 is at the second level (=0).

In the second switch SWB, an output $P_{DC2}$ of the second constant direct-current voltage control section 110B is input to a third input terminal, and an output $P_{DC1}$ of the first constant direct-current voltage control section 110A is input to a fourth input terminal. The second switch SWB connects the third input terminal and the output terminal when the second control signal CMD2 is at the first level (=1). The second switch SWB connects the fourth input terminal and the output terminal when the second control signal CMD2 is at the second level (=0).

A torque computing section 120 includes a partial torque computing section 120', a first computing section 140A, a first adder 150A, a second computing section 140B, and a second adder 150B.

The partial torque computing section 120' receives an axle torque command Tref and computes a member (first operand) relating to the axle torque command Tref in the above equation (19) and a member (third operand) relating to the axle torque command Tref of the above equation (20). The first computing section 140A receives a value output from the first switch SWA, and computes a member (second operand) relating to a direct-current section energy $P_{DC}$ in the above equation (19). The first adder 150A adds and outputs the first operand and the second operand. The second computing section 140B receives a value output from the second switch SWB and computes a member (fourth operand) relating to the direct-current section energy $P_{DC}$ of the equation (20) described above. The second adder 150B adds and outputs the third operand and the fourth operand.

The vehicle control apparatus CTR includes the master control section MC1, the power generator control section MC2, and the motor control section MC3. The master control section MC1, the power generator control section MC2, and the motor control section MC3 are configured to be operated by different processors.

The master control section MC1 includes a revolving speed determining section 100, a partial torque computing section 120', and the constant direct-current voltage control selecting section 130.

The revolving speed determining section 100 includes a table storing revolving speeds of the internal combustion engine 10 associated with output torques of the axle 80, for example, in the same manner as the example described above. The revolving speed determining section 100 receives an axle torque command Tref supplied from outside, and reads and outputs the revolving speed of the internal combustion engine 10 corresponding to the axle torque command Tref.

The partial torque computing section 120' receives the axle torque command Tref supplied from the outside, computes and outputs partial torque commands $T_{MG1'}$ and $T_{MG2'}$ which correspond to members (the first operand and the third operand described above) relating to the torque commands $T_{MG1}$ and $T_{MG2}$ computed by the above-described equations (19) and (20).

[Mathematical 12]

$$T_{MG1}' = -\frac{G_S \omega_R}{G_S \omega_S + G_R \omega_R} T_{ref} \quad (2\,1)$$

$$T_{MG2}' = \frac{G_S \omega_S}{G_S \omega_S + G_R \omega_R} T_{ref} \quad (2\,2)$$

The constant direct-current voltage control selecting section 130 receives the rotation angular speed $\omega_{MG1}$ of the power generator 30, a maximum torque feature $T_{MAX-MG1}$ of the power generator 30, the rotation angular speed $\omega_{MG2}$ of the motor 60, and a maximum torque feature $T_{MAX-MG2}$ of the motor 60, and outputs the first control signal CMD1 and the second control signal CMD2. The first control signal CMD1 and the second control signal CMD2 are signals for selecting whether to control the voltage of the direct-current link constant by the power generator 30 or control the voltage of the direct-current link constant by the motor 60.

In the present embodiment, the direct-current link is connected between a first inverter 40 configured to drive the power generator 30, which corresponds to the first electric motor, and a second inverter 50 configured to drive the motor 60, which corresponds to the second electric motor, and thus constant voltage control may be performed either by an operation of the power generator 30 or by an operation of the motor 60.

The torque that the electric motor can generally output is limited. Assuming that a maximum torque that can be output when the electric motor rotates at an angular speed $\omega$ is a maximum torque $T_{MAX}$, an electric motor having a greater product of the angular speed $\omega$ and the maximum torque $T_{MAX}$ has more capacity available for controlling the voltage of the direct-current link.

From the reason described above, the constant direct-current voltage control selecting section 130 compares a product of the rotation angular speed $\omega_{MG1}$ and the maximum torque $T_{MAX-MG1}$ of the power generator 30 and a product of the rotation angular speed $\omega_{MG2}$ and a maximum torque $T_{MAX-MG2}$ of the motor 60, and outputs the first control signal CMD1 and the second control signal CMD2 so as to perform voltage control of the direct-current link by using an electric motor having a larger product of the rotation angular speed and the maximum torque.

In the present embodiment, the constant direct-current voltage control selecting section 130 outputs, for example, the first control signal CMD1 "1" and the second control signal CMD2 "0" when $\omega_{MG1}T_{MAX-MG1} > \omega_{MG2}T_{MAX-MG2}$ is established, and outputs the first control signal CMD1 "0" and the second control signal CMD2 "1" when $\omega_{MG1}T_{MAX-MG1} \leq \omega_{MG2}T_{MAX-MG2}$ is established. Note that the first control signal CMD1 and the second control signal CMD2 issue, for example, a voltage control stop command when the value is "0", and issue a voltage control operation command when the value is "1".

Note that directions of increase and decrease of the speeds of the sun gear S and the ring gear R are opposite to each other from the equation (5) described above, and thus the speed of the motor 60 increases when the speed of the power generator 30 is decreasing, and the speed of the motor 60 decreases when the speed of the power generator 30 is increasing. From this consideration, in a state in which the internal combustion engine 10 is in operation, the voltage control of the direct-current link is enabled either in the power generator 30 or in the motor 60.

The power generator control section MC2 includes the first constant direct-current voltage control section 110A, the first computing section 140A, the first adder 150A, a first inverter control section 42, and the first switch SWA.

The first constant direct-current voltage control section 110A receives the first control signal CMD1, a target value $V_{DCref}$ of the voltage of the direct-current link, and the direct voltage detecting value $V_{DC}$, and computes and outputs a value of the direct-current section energy $P_{DC1}$ so that a difference between the link voltage command $V_{DCref}$ and the direct voltage detecting value $V_{DC}$ becomes zero when the value of the first control signal CMD1 is "1" in the same manner as the constant direct-current voltage control section 110 of the example described above.

The direct-current section energy $P_{DC1}$ is supplied to one of input terminals of the switch SWA and other one of input terminals of a switch SWB described later via the master control section MC1.

The first switch SWA includes two input terminals (first input terminal and second input terminal) and one output terminal, and switches so that either the first input terminal or the second input terminal is electrically connected to the output terminal depending on the value of the first control signal CMD1. The switch SWA electrically connects the first input terminal and the output terminal when the value of the first control signal CMD1 is "1", and electrically connects the second input terminal and the output terminal when the value of the control signal CMD1 is "0".

The first computing section 140A receives either one of the direct-current section energy $P_{DC1}$ and the direct-current section energy $P_{DC2}$ from the switch SWA, and outputs a constant voltage command AVR1 given below, which corresponds to the member (the second operand) relating to the direct-current section energy $P_{DC}$ of the torque command $T_{MG1}$ computed by the above equations (19) and (20) to the first adder 150A.

[Mathematical 13]

$$AVR1 = -\frac{G_S}{G_S\omega_S + G_R\omega_R}P_{DC1} \quad \text{or} \quad = -\frac{G_S}{G_S\omega_S + G_R\omega_R}P_{DC2} \quad (23)$$

The first adder 150A receives a partial torque command $T_{MG1}$' output from the partial torque computing section 120' of the master control section MC1 and the constant voltage command AVR1 output from the first computing section 140A, and outputs a sum of the partial torque command $T_{MG1}$' and the constant voltage command AVR1 to the first inverter control section 42 as the torque command $T_{MG1}$ of the power generator 30.

The first inverter control section 42 receives the torque command $T_{MG1}$ in the same manner as in the example described above, performs control (vector control or the like) for outputting a torque of the torque command $T_{MG1}$, and generates and outputs a gate command to the first inverter 40.

The motor control section MC3 includes the second constant direct-current voltage control section 110B, the second computing section 140B, the second adder 150B, a second inverter control section 52, and the second switch SWB.

The second constant direct-current voltage control section 110B receives the second control signal CMD2, a target value $V_{DCref}$ of the voltage of the direct-current link, and the direct voltage detecting value $V_{DC}$, and computes and outputs a value of the direct-current section energy $P_{DC2}$ so that a difference between the link voltage command $V_{DCref}$ and the direct voltage detecting value $V_{DC}$ becomes zero when the value of the second control signal CMD2 is "1" in the same manner as the constant direct-current voltage control section 110 of the example described above.

The direct-current section energy $P_{DC2}$ is supplied to a third input terminal of the second switch SWB and the second input terminals of the switch SWA described above via the master control section MC1.

The second switch SWB includes two input terminals (third input terminal and fourth input terminal) and an output terminal, and switches so that either the third input terminal or the fourth input terminal is electrically connected to the output terminal depending on the value of the second control signal CMD2. The second switch SWB electrically connects the third input terminal and the output terminal when the value of the second control signal CMD2 is "1", and electrically connects the fourth input terminal and the output terminal when the value of the second control signal CMD2 is "0".

The second computing section 140B receives either one of the direct-current section energy $P_{DC2}$ and the direct-current section energy $P_{DC1}$ from the second switch SWB, and outputs a constant voltage command AVR2 given below, which corresponds to the member (the fourth operand) relating to the direct-current section energy PDC of the torque command $T_{MG2}$ computed by the above equations (19) and (20) to the adder 150B.

[Mathematical 14]

$$AVR2 = -\frac{G_S}{G_S\omega_S + G_R\omega_R}P_{DC2} \quad \text{or} \quad = -\frac{G_S}{G_S\omega_S + G_R\omega_R}P_{DC1} \quad (24)$$

The second adder 150B receives a partial torque command $T_{MG2}'$ output from the partial torque computing section 120' of the master control section MC1 and the constant voltage command AVR2 output from the second computing section 140B, and outputs a sum of the partial torque command Torque command $T_{MG2}'$ and the constant voltage command AVR2 to the second inverter control section 52 as the torque command $T_{MG2}$ of the motor 60.

The second inverter control section 52 receives the torque command $T_{MG2}$ in the same manner as in the example described above, performs control (vector control or the like) for outputting a torque of the torque command $T_{MG2}$, and generates and outputs a gate command to the second inverter 50.

Therefore, when controlling the voltage of the direct-current link to be constant by the operation of the power generator 30, the torque commands $T_{MG1}$ and $T_{MG2}$ may be expressed as given below.

[Mathematical 15]

$$T_{MG1} = -\frac{G_S\omega_R}{G_S\omega_S + G_R\omega_R}T_{ref} - \frac{G_S}{G_S\omega_S + G_R\omega_R}P_{DC1} \quad (25)$$

$$T_{MG2} = \frac{G_S\omega_S}{G_S\omega_S + G_R\omega_R}T_{ref} - \frac{G_R}{G_S\omega_S + G_R\omega_R}P_{DC1} \quad (26)$$

When controlling the voltage of the direct-current link to be constant by the operation of the motor 60, the torque commands $T_{MG1}$ and $T_{MG2}$ may be expressed as given below.

[Mathematical 16]

$$T_{MG1} = -\frac{G_S\omega_R}{G_S\omega_S + G_R\omega_R}T_{ref} - \frac{G_S}{G_S\omega_S + G_R\omega_R}P_{DC2} \quad (27)$$

$$T_{MG2} = \frac{G_S\omega_S}{G_S\omega_S + G_R\omega_R}T_{ref} - \frac{G_R}{G_S\omega_S + G_R\omega_R}P_{DC2} \quad (28)$$

In the example described above, the output (direct-current section energy $P_{DC}$) of the constant direct-current voltage control section 110 is fed to the first inverter control section 42 and the second inverter control section 52 without delay, follow-up to variation of consumption energy of the auxiliary machine 90 is enabled. For example, however, when the configuration that controls the power generator 30 and the configuration that controls the motor 60 are operated by processors different from each other, mutual issue of commands between the configurations may delay and thus the torque response delays correspondingly.

For example, when constant voltage control of the direct-current link is performed by the operation of the power generator 30 while the power generator 30 rotates at a constant speed, if the consumed energy of the auxiliary machine 90 changes, large energy may not be generated because the power generator 30 rotates at a low speed, so that the follow-up to the change in consumed energy of the auxiliary machine 90 may not be achieved.

In contrast, the motor 60 may not receive the value of the direct-current section energy immediately due to the delay of communication between the control section of the power generator 30 and the control section of the motor 60, and thus may not be able to follow up the change in consumed energy of the auxiliary machine immediately. In such cases, the voltage of the direct-current link varies, and thus the operation of the entire vehicle system may stop.

According to the vehicle system of the present embodiment, since determination of which one of the electric motors; the power generator 30 and the motor 60, is used for voltage control of the direct-current link depends on the operating states (a product of the rotation angular speed and the maximum torque) of the power generator 30 and the motor 60, stabilized voltage control of direct-current link voltage is achieved. The control section of the electric motor which is not involved in voltage control receives the direct-current section energy $P_{DC}$ from the control section of the electric motor which is involved in the voltage control and thus follow-up is enabled even when the voltage of the direct-current link is changed.

Note that, in the present embodiment, even though the communication delay has occurred when the configuration for controlling the power generator 30 and the configuration for controlling the motor 60 are operated by the processors different from each other, the delay is as small as a range from 10 ms to 100 ms. In other words, according to the vehicle system of the present embodiment, a stable drive is achieved.

Note that in the present embodiment, the constant direct-current voltage control selecting section 130 is configured to control the voltage by the electric motor having a larger value in product of the rotation angular speed and the maximum torque. However, a configuration such that only the rotation angular speeds are compared to select the electric motor having a larger rotation angular speed for the voltage control is also applicable. In this case as well, the same effects as the present embodiment described above is obtained, and thus, the present embodiment may be applied also to, for example, a vehicle having no sensor for the rotation angular speed.

A vehicle system according to the second embodiment will be described with reference to the drawings.

The vehicle system according to the present embodiment is provided with a configuration considering an operation when the vehicle is stopped, that is, when the power generator 30 is stopped.

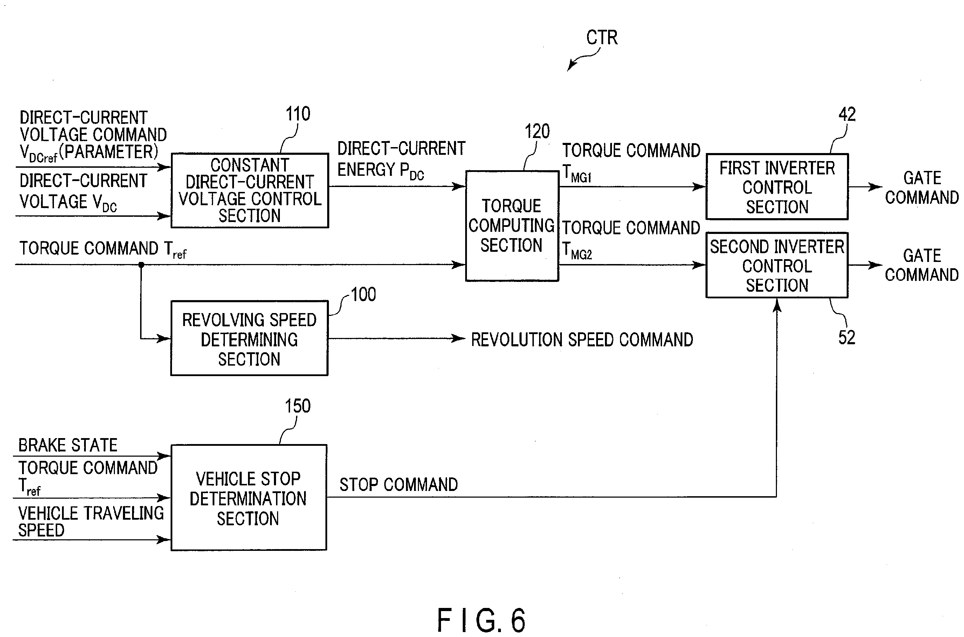

FIG. 6 is a block diagram schematically illustrating a configuration of a vehicle control apparatus of a vehicle system according to the second embodiment.

A control apparatus CTR is further provided with a vehicle stop determination section 150 in addition to the control apparatus CTR in the vehicle system according to the first embodiment.

The vehicle stop determination 150 receives a braking state supplied from outside, an axle torque command Tref, and a vehicle traveling speed $\omega_R$, and outputs a stop command to the second inverter control section 52. When brake is applied, the value of an axle torque command Tref is "0", and a vehicle traveling speed is "0", the vehicle stop determination section 150 determines that the vehicle is stopped, and a stop command is set to "1", while when the above-described conditions are not satisfied, the stop command is set to "0".

A second inverter control section 52 stops the operation of a second inverter 50 when the value of the stop command input from the vehicle stop determination 150 is "1". In other words, the second inverter control section 52 outputs a gate command to the second inverter 50 with the torque command $T_{MG2} = 0$ irrespective of the value of the torque command $T_{MG2}$ input from a torque computing section 120.

When the vehicle is stopped, an output torque $T_{OUT}$ (=Tref) of the axle 80 is equal to 0, the torque command $T_{MG1}$ of the power generator 30 and the torque command $T_{MG2}$ of the motor 60 by the equations may be expressed as the following equations (19) and (20).

[Mathematical 17]

$$T_{MG1} = -\frac{1}{\omega_S}P_{DC} \quad (29)$$

$$T_{MG2} = -\frac{G_R}{G_S\omega_S}P_{DC} \quad (30)$$

Since the motor 60 is coupled to the axle 80, when the vehicle is stopped, the rotation angular speed $\omega_{MG2}$ of the motor is equal to "0". Therefore, when the vehicle is stopped, the motor 60 does not supply energy to the direct-current link, and thus the motor 60 does not affect the voltage control of the direct-current link. In addition, in a state in which the brake mechanism (not illustrated) of the vehicle is operated, a torque generated in the motor 60 is absorbed by a brake mechanism instead. Therefore, when the vehicle is stopped, the operation of the second inverter 50 may be stopped. Consequently, a failure rate may be reduced by not performing unnecessary operations and, simultaneously, an increase in temperature due to a loss of the electric energy of the motor 60 and the second inverter 50 may be suppressed. In other words, according to the vehicle system of the present embodiment, a stable drive is achieved.

In other words, in the present embodiment, when the value of a stop command is "1", torque commands $T_{MG1}$, $T_{MG2}$ may be expressed as given below.

[Mathematical 18]

$$T_{MG1} = -\frac{1}{\omega_S}P_{DC} \quad (31)$$

$$T_{MG2} = 0 \text{ (Operation stop)} \quad (32)$$

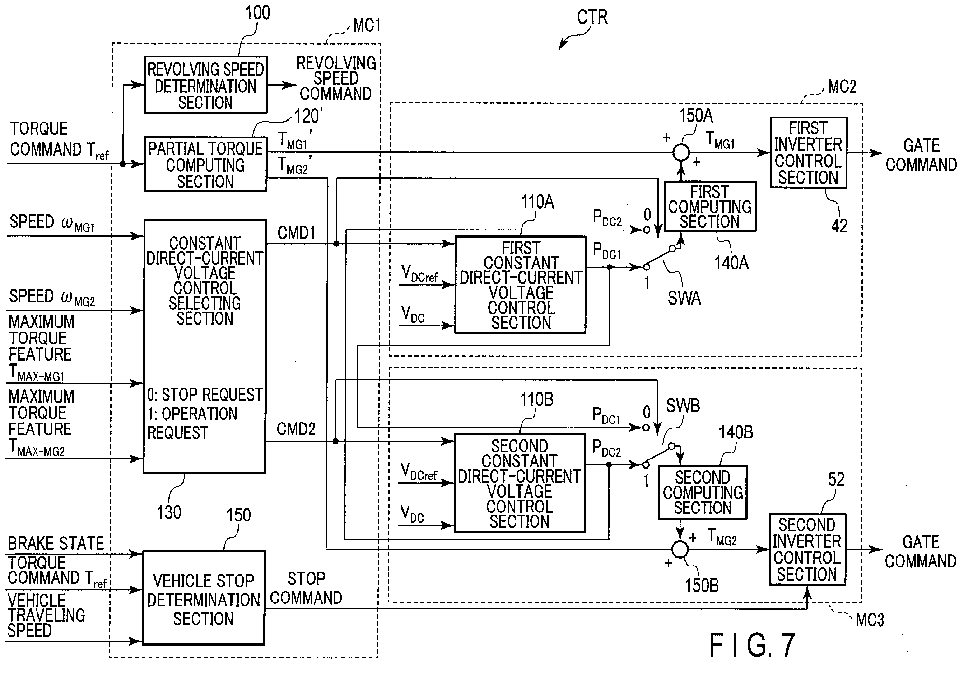

FIG. 7 is a block diagram schematically illustrating another configuration example of the vehicle control apparatus of the vehicle system according to the second embodiment.

In this example, the vehicle control apparatus CTR is further provided with the vehicle stop determination section 150 in addition to the vehicle control apparatus in the vehicle system according to the first embodiment.

In this example as well, the vehicle stop determination 150 receives a braking state supplied from outside, a torque command Tref, and a vehicle traveling speed ωR, and outputs a stop command to the second inverter control section 52. When brake is applied, the value of an axle torque command Tref is "0", and a vehicle traveling speed is "0", the vehicle stop determination section 150 determines that the vehicle is stopped, and a stop command is set to "1", while when the above-described conditions are not satisfied, the stop command is set to "0".

A second inverter control section 52 stops the operation of a second inverter 50 when the value of the stop command input from the vehicle stop determination 150 is "1". In other words, the second inverter control section 52 outputs a gate command to the second inverter 50 with the torque command $T_{MG2} = 0$ irrespective of the value of the torque command $T_{MG2}$ input from a torque computing section 120.

In other words, in this example, when the stop command is "1", the following expression is established by the equations (25) and (26).

[Mathematical 19]

$$T_{MG1} = -\frac{1}{\omega_S} P_{DC1} \quad (33)$$

$$T_{MG2} = 0 \text{ (Operation stop)} \quad (34)$$

As described above, according to the vehicle system of the present embodiment, a stable drive is achieved.

## Claims

1. A vehicle system comprising:

    an internal combustion engine (10);
    a first electric motor (30);
    a second electric motor (60);
    a first power transmission mechanism (20) configured to transmit a revolution of the internal combustion engine (10) to the first electric motor (30) and a second power transmission mechanism (70);
    an axle (80) configured to rotate by being coupled to the second power transmission mechanism (70),
    the second power transmission mechanism (70) transmitting the revolution between the second electric motor (60) and the axle (80) and between the first power transmission mechanism (20) and the axle (80);
    the first power transmission mechanism (20) comprises: a planetary carrier configured to rotate by energy generated by the internal combustion engine (10); a sun gear configured to transmit a rotative power to the first electric motor (30); and a ring gear configured to transmit a rotative power to the second power transmission mechanism (70);
    a first inverter (40) configured to drive the first electric motor (30);
    a second inverter (50) connected to the first inverter (40) via a direct-current link and drive the second electric motor (60);
    a voltage detector (VS) configured to detect a link voltage of the direct-current link;
    a master control section (MC1);
    a first electric motor control section (MC2) including a first inverter control section (42) configured to output a gate command to the first inverter (40) based on a torque command ($T_{MG1}$) of the first electric motor (30); and
    a second electric motor control section (MC3) including a second inverter control section (52) configured to output a gate command to the second inverter (50) based on a torque command ($T_{MG2}$) of the second electric motor (60),
    **characterized in that**
    the torque command of the first electric motor (30) is a sum of a first operand and a second operand, the first operand being a negative value of a value obtained by dividing a product of a number of teeth of the sun gear, a rotation angular speed of the ring gear, and a axle torque command ($T_{ref}$) by a sum of a product of the number of teeth of the sun gear and a rotation angular speed of the sun gear and a product of a number of teeth of the ring gear and the rotation angular speed of the ring gear, and the second operand being a negative value of a value obtained by dividing a product of the number of teeth of the sun gear and a direct-current section energy ($P_{DC}$) by a sum of the product of the number of teeth and the rotation angular speed of the sun gear and the product of the number of teeth of the ring gear and the rotation angular speed of the ring gear,

the torque command of the second electric motor (60) is a sum of a third operand and a fourth operand, the third operand being obtained by dividing a product of the number of teeth of the sun gear and the rotation angular speed of the sun gear and the axle torque command ($T_{ref}$) by a sum of the product of the number of teeth of the sun gear and the rotation angular speed of the sun gear and the product of the number of teeth of the ring gear and the rotation angular speed of the ring gear, and the fourth operand being a negative value of a value obtained by dividing the product of the number of teeth of the sun gear and the direct-current section energy ($P_{DC}$) by a sum of the product of the number of teeth of the sun gear and the rotation angular speed of the sun gear and the product of the number of teeth of the ring gear and the rotation angular speed of the ring gear,

the master control section (MC1) includes a partial torque computing section (120') configured to receive the axle torque command and compute the first operand and the third operand; and a constant direct-current voltage control selecting section (130) configured to select an electric motor for performing voltage control of the direct-current link based on a rotation angular speed of the first electric motor (30) and a rotation angular speed of the second electric motor (60) and output a first control signal (CMD1) and a second control signal (CMD2), the first control signal having a value at a first level when the voltage of the direct-current link is controlled by an operation of the first electric motor (30) and having a value at a second level when the voltage of the direct-current link is controlled by the second electric motor (60), the second control signal having a value at the first level when the voltage of the direct-current link is controlled by an operation of the second electric motor (60) and having a value at the second level when the voltage of the direct-current link is controlled by the operation of the first electric motor (30);

the first electric motor control section (MC2) including: a first control section (110A) configured to receive a link voltage command and the link voltage and compute and output the direct-current section energy; a first switch (SWA) configured to connect a first input terminal and a first output terminal when an output from the first control section (110A) is input to the first input terminal, an output of the second control unit (110B) is input to a second input terminal, and the first control signal is at the first level, and connect the second input terminal and the first output terminal when the first control signal is at the second level; a first computing section (140A) configured to receive a value output from the first switch (SWA) and compute the second operand; and a first adder (150A) configured to output a sum of the first operand and the second operand as the torque command of the first electric motor (30), and

the second electric motor control section (MC3) including: a second control section (110B) configured to receive the link voltage command and the link voltage and compute and output the direct-current section energy; a second switch (SWB) configured to connect a third input terminal and a second output terminal when the second control signal is at the first level and connect a fourth input terminal and the second output terminal when the second control signal is at the second level, the output from the second control section (110B) is input to the third input terminal, the output of the first control section (110A) is input to the fourth input terminal; a second computing section (140B) configured to receive a value output from the second switch (SWB) and compute the fourth operand; and a second adder (150B) configured to output a sum of the third operand and the fourth operand as the torque command of the second electric motor (60).

2. The vehicle system according to claim 1, further comprising a vehicle stop determination section (150)

configured to output a stop command at a first level when receiving a braking state supplied from an outside, the axle torque command, and a vehicle traveling speed, the axle torque command is zero, the vehicle traveling speed is zero, and the brake is applied, wherein

the second inverter control section sets the torque command of the second electric motor to zero and outputs the gate command when the second inverter control section receives the stop command and the stop command is at the first level.

**Patentansprüche**

1. Fahrzeugsystem, das Folgendes umfasst:

einen Verbrennungsmotor (10);

einen ersten Elektromotor (30);

einen zweiten Elektromotor (60);

einen ersten Kraftübertragungsmechanismus (20), der dazu ausgestaltet ist, eine Umdrehung des Verbrennungsmotors (10) auf den ersten Elektromotor (30) und einen zweiten Kraftübertragungsmechanismus (70) zu übertragen;

eine Achse (80), die dazu ausgestaltet ist, sich dadurch, dass sie an den zweiten Kraftübertragungsmechanismus (70) gekoppelt ist, zu drehen,

wobei der zweite Kraftübertragungsmechanismus (70) die Umdrehung zwischen dem zweiten Elektromotor (60) und der Achse (80) und

zwischen dem ersten Kraftübertragungsmechanismus (20) und der Achse (80) überträgt;

der erste Kraftübertragungsmechanismus (20) Folgendes umfasst:

einen Planetenträger, der dazu ausgestaltet ist, sich durch Energie, die von dem Verbrennungsmotor (10) erzeugt wird, zu drehen; ein Sonnenrad, das dazu ausgestaltet ist, eine Drehkraft auf den ersten Elektromotor (30) zu übertragen; und ein Hohlrad, das dazu ausgestaltet ist, eine Drehkraft auf den zweiten Kraftübertragungsmechanismus (70) zu übertragen;

einen ersten Wechselrichter (40), der dazu ausgestaltet ist, den ersten Elektromotor (30) anzutreiben;

einen zweiten Wechselrichter (50), der über eine Gleichstromverbindung mit dem ersten Wechselrichter (40) verbunden ist und den zweiten Elektromotor (60) antreibt;

einen Spannungsdetektor (VS), der dazu ausgestaltet ist, eine Verbindungsspannung der Gleichstromverbindung zu detektieren;

eine Hauptsteuereinheit (MC1);

eine erste Elektromotor-Steuereinheit (MC2), die eine erste Wechselrichtersteuereinheit (42) umfasst, die dazu ausgestaltet ist, einen Gate-Befehl an den ersten Wechselrichter (40) basierend auf einem Drehmomentbefehl ($T_{MG1}$) des ersten Elektromotors (30) auszugeben; und

eine zweite Elektromotor-Steuereinheit (MC3), die eine zweite Wechselrichter-Steuereinheit (52) umfasst, die dazu ausgestaltet ist,

einen Gate-Befehl an den zweiten Wechselrichter (50) basierend auf einem Drehmomentbefehl ($T_{MG2}$) des zweiten Elektromotors (60) auszugeben,

**dadurch gekennzeichnet, dass**

der Drehmomentbefehl des ersten Elektromotors (30) eine Summe eines ersten Operanden und eines zweiten Operanden ist, wobei der erste Operand ein negativer Wert eines Werts ist, der durch Dividieren eines Produkts einer Anzahl von Zähnen des Sonnenrads, einer Drehwinkelgeschwindigkeit des Hohlrads und eines Achsendrehmomentbefehls ($T_{ref}$) durch eine Summe eines Produkts der Anzahl von Zähnen des Sonnenrads und einer Drehwinkelgeschwindigkeit des Sonnenrads und eines Produkts einer Anzahl von Zähnen des Hohlrads und der Drehwinkelgeschwindigkeit des Hohlrads erhalten wird, und der zweite Operand ein negativer Wert eines Werts ist, der durch Dividieren eines Produkts der Anzahl von Zähnen des Sonnenrads und einer Gleichstromeinheitsenergie ($P_{DC}$) durch eine Summe des Produkts der Anzahl von Zähnen und der Drehwinkelgeschwindigkeit des Sonnenrads und des Produkts der Anzahl von Zähnen des Hohlrads und der Drehwinkelgeschwindigkeit des Hohlrads erhalten wird,

der Drehmomentbefehl des zweiten Elektromotors (60) eine Summe eines dritten Operanden und eines vierten Operanden ist, wobei der dritte Operand durch Dividieren eines Produkts der Anzahl von Zähnen des Sonnenrads und der Drehwinkelgeschwindigkeit des Sonnenrads und des Achsendrehmomentbefehls ($T_{ref}$) durch eine Summe des Produkts der Anzahl von Zähnen des Sonnenrads und der Drehwinkelgeschwindigkeit des Sonnenrads und des Produkts der Anzahl von Zähnen des Hohlrads und der Drehwinkelgeschwindigkeit des Hohlrads erhalten wird, und der vierte Operand ein negativer Wert eines Werts ist, der durch Dividieren des Produkts der Anzahl von Zähnen des Sonnenrads und der Gleichstromeinheitsenergie ($P_{DC}$) durch eine Summe des Produkts der Anzahl von Zähnen des Sonnenrads und der Drehwinkelgeschwindigkeit des Sonnenrads und

des Produkts der Anzahl von Zähnen des Hohlrads und der Drehwinkelgeschwindigkeit des Hohlrads erhalten wird,

die Hauptsteuereinheit (MC1) eine Teildrehmoment-Berechnungseinheit (120') umfasst, die dazu ausgestaltet ist, den Achsendrehmomentbefehl zu empfangen und den ersten Operanden und den dritten Operanden zu berechnen; und eine Konstantgleichstrom-Spannungssteuerungsauswahleinheit (130), die dazu ausgestaltet ist, einen Elektromotor zum Durchführen von Spannungssteuerung der Gleichstromverbindung basierend auf einer Drehwinkelgeschwindigkeit des ersten Elektromotors (30) und einer Drehwinkelgeschwindigkeit des zweiten Elektromotors (60) durchzuführen und ein erstes Steuersignal (CMD1) und ein zweites Steuersignal (CMD2) auszugeben, wobei das erste Steuersignal einen Wert auf einem ersten Pegel aufweist, wenn die Spannung der Gleichstromverbindung durch einen Betrieb des ersten Elektromotors (30) gesteuert wird, und einen Wert auf einem zweiten Pegel aufweist, wenn die Spannung der Gleichstromverbindung durch den zweiten Elektromotor (60) gesteuert wird, wobei das zweite Steuersignal einen Wert auf dem ersten Pegel aufweist, wenn die Spannung der Gleichstromverbindung durch einen Betrieb des zweiten Elektromotors (60) gesteuert wird, und einen Wert auf dem zweiten Pegel aufweist, wenn die Spannung der Gleichstromverbindung durch den Betrieb des ersten Elektromotors (30) gesteuert wird;

die erste Elektromotorsteuereinheit (MC2) Folgendes umfasst: eine erste Steuereinheit (110A), die dazu ausgestaltet ist, einen Verbindungsspannungsbefehl und die Verbindungsspannung zu empfangen und die Gleichstromeinheitsenergie zu berechnen und auszugeben; einen ersten Schalter (SWA), der dazu ausgestaltet ist, einen ersten Eingangsanschluss und einen ersten Ausgangsanschluss zu verbinden, wenn ein Ausgang von der ersten Steuereinheit (110A) in den ersten Eingangsanschluss eingespeist wird, ein Ausgang der zweiten Steuereinheit (110B) in den zweiten Eingangsanschluss eingespeist wird, und das erste Steuersignal sich auf dem ersten Pegel befindet, und den zweiten Eingangsanschluss und den ersten Ausgangsanschluss zu verbinden, wenn das erste Steuersignal sich auf dem zweiten Pegel befindet; eine erste Berechnungseinheit (140A), die dazu ausgestaltet ist, einen Wert zu empfangen, der von dem ersten Schalter (SWA) ausgegeben wird, und den zweiten Operanden zu berechnen; und einen ersten Addierer (150A), der dazu ausgestaltet ist, eine Summe des ersten Operanden und des zweiten Operanden als den Drehmomentbefehl des ersten Elektromotors (30) auszugeben, und

die zweite Elektromotorsteuereinheit (MC3) Folgendes umfasst: eine zweite Steuereinheit (110B), die dazu ausgestaltet ist, den Verbindungsspannungsbefehl und die Verbindungsspannung zu empfangen und die Gleichstromeinheitsenergie zu berechnen und auszugeben; einen zweiten Schalter (SWB), der dazu ausgestaltet ist, einen dritten Eingangsanschluss und einen zweiten Ausgangsanschluss zu verbinden, wenn das zweite Steuersignal sich auf dem ersten Pegel befindet, und einen vierten Eingangsanschluss und den zweiten Ausgangsanschluss zu verbinden, wenn das zweite Steuersignal sich auf dem zweiten Pegel befindet, der Ausgang von der zweiten Steuereinheit (110B) in den dritten Eingangsanschluss eingespeist wird, der Ausgang der ersten Steuereinheit (110A) in den vierten Eingangsanschluss eingespeist wird; eine zweite Recheneinheit (140B), die dazu ausgestaltet ist, einen Wert zu empfangen, der von dem zweiten Schalter (SWB) ausgebeben wird, und den vierten Operanden zu berechnen; und einen zweiten Addierer (150B), der dazu ausgestaltet ist, eine Summe des dritten Operanden und des vierten Operanden als den Drehmomentbefehl des zweiten Elektromotors (60) auszugeben.

2. Fahrzeugsystem nach Anspruch 1, das ferner eine Fahrzeugstopp-Bestimmungseinheit (150) umfasst, die dazu ausgestaltet ist, einen Stopp-Befehl auf einem ersten Pegel auszugeben, wenn ein Bremszustand, der von außerhalb geliefert wird, der Achsendrehmomentbefehl und eine Fahrzeugfahrgeschwindigkeit empfangen werden, der Achsendrehmomentbefehl null ist, die Fahrzeugfahrgeschwindigkeit null ist und die Bremse betätigt wird, wobei

die zweite Wechselrichter-Steuereinheit den Drehmomentbefehl des zweiten Elektromotors auf null einstellt und den Gate-Befehl ausgibt,
wenn die zweite Wechselrichtersteuereinheit den Stopp-Befehl empfängt und der Stopp-Befehl sich auf dem ersten Pegel befindet.

**Revendications**

1. Système de véhicule comprenant :

un moteur à combustion interne (10) ;
un premier moteur électrique (30) ;
un deuxième moteur électrique (60) ;
un premier mécanisme de transmission de puissance (20) configuré pour transmettre une rotation du moteur à combustion interne (10) au premier moteur électrique (30) et à un deuxième mécanisme de transmission de puissance (70) ;
un essieu (80) configuré pour tourner en étant couplé au deuxième mécanisme de transmission de puissance (70),
le deuxième mécanisme de transmission de puissance (70) transmettant la rotation entre le deuxième moteur électrique (60) et
l'essieu (80) et entre le premier mécanisme de transmission de puissance (20) et l'essieu (80) ;

le premier mécanisme de transmission de puissance (20) comprend :

un porte-satellites configuré pour tourner sous l'effet d'une énergie générée par le moteur à combustion interne (10) ; une roue solaire configurée pour transmettre une puissance rotative au premier moteur électrique (30) ; et une couronne dentée configurée pour transmettre une puissance rotative au deuxième mécanisme de transmission de puissance (70) ;
un premier onduleur (40) configuré pour entraîner le premier moteur électrique (30) ;
un deuxième onduleur (50) relié au premier onduleur (40) par l'intermédiaire d'une liaison en courant continu et pour entraîner le deuxième moteur électrique (60) ;
un détecteur de tension (VS) configuré pour détecter une tension de liaison de la liaison en courant continu ;
une section de commande principale (MC1) ;
une première section de commande de moteur électrique (MC2) incluant une première section de commande d'onduleur (42) configurée pour délivrer une instruction de porte au premier onduleur (40) sur la base d'une instruction de couple ($T_{MG1}$) du premier moteur électrique (30) ; et
une deuxième section de commande de moteur électrique (MC3) incluant une deuxième section de commande d'onduleur (52) configurée pour délivrer une instruction de porte au deuxième onduleur (50) sur la base d'une instruction de couple ($T_{MG2}$) du deuxième moteur électrique (60),
**caractérisé en ce que**
l'instruction de couple du premier moteur électrique (30) est une somme d'un premier opérande et d'un deuxième opérande, le premier opérande étant une valeur négative d'une valeur obtenue par la division d'un produit d'un nombre de dents de la roue solaire, d'une vitesse angulaire de rotation de la couronne dentée, et d'une instruction de couple d'essieu ($T_{ref}$) par une somme d'un produit du nombre de dents de la roue solaire et d'une vitesse angulaire de rotation de la roue solaire et d'un produit d'un nombre de dents de la couronne dentée et de la vitesse angulaire de rotation de la couronne dentée, et le deuxième opérande étant une valeur négative d'une valeur obtenue par la division d'un produit du nombre de dents de la roue solaire et d'une énergie de section de courant continu ($P_{DC}$) par une somme du produit du nombre de dents et de la vitesse angulaire de rotation de la roue solaire et du produit du nombre de dents de la couronne dentée et de la vitesse angulaire de rotation de la couronne dentée,
l'instruction de couple du deuxième moteur électrique (60) est une somme d'un troisième opérande et d'un quatrième opérande, le troisième opérande étant obtenu par la division d'un produit du nombre de dents de la roue solaire et de la vitesse angulaire de rotation de la roue solaire et de l'instruction de couple d'essieu ($T_{ref}$) par une somme du produit du nombre de dents de la roue solaire et de la vitesse angulaire de rotation de la roue solaire et du produit du nombre de dents de la couronne dentée et de la vitesse angulaire de rotation de la couronne dentée, et le quatrième opérande étant une valeur négative d'une valeur obtenue par la division du produit du nombre de dents de la roue solaire et de l'énergie de section de courant continu ($P_{DC}$) par une somme du produit du nombre de dents de la roue solaire et de la vitesse angulaire de rotation de la roue solaire et du produit du nombre de dents de la couronne dentée et de la vitesse angulaire de rotation de la couronne dentée,
la section de commande principale (MC1) inclut une section de calcul de couple partiel (120') configurée pour recevoir l'instruction de couple d'essieu et calculer le premier opérande et le troisième opérande ; et
une section de sélection de commande de tension de courant continu constante (130) configurée pour sélectionner un moteur électrique pour effectuer une commande de tension de la liaison en courant continu sur la base d'une vitesse angulaire de rotation du premier moteur électrique (30) et d'une vitesse angulaire de rotation du deuxième moteur électrique (60) et délivrer un premier signal de commande (CMD1) et un deuxième signal de commande (CMD2), le premier signal de commande ayant une valeur à un premier niveau lorsque la tension de la liaison en courant continu est commandée par une opération du premier moteur électrique (30) et ayant une valeur à un deuxième niveau lorsque la tension de la liaison en courant continu est commandée par le deuxième moteur électrique (60), le deuxième signal de commande ayant une valeur au premier niveau lorsque la tension de la liaison en courant continu est commandée par une opération du deuxième moteur électrique (60) et ayant une valeur au deuxième niveau lorsque la tension de la liaison en courant continu est commandée par l'opération du premier moteur électrique (30) ;
la première section de commande de moteur électrique (MC2) incluant : une première section de commande (110A) configurée pour recevoir une instruction de tension de liaison et la tension de liaison et calculer et délivrer l'énergie de section de courant continu ; un premier commutateur (SWA) configuré pour relier une première borne d'entrée et une première borne de sortie lorsqu'une sortie de la première section de commande (110A) est entrée à la première borne d'entrée,
une sortie de la deuxième unité de commande (110B) est entrée à une deuxième borne d'entrée, et le premier signal de commande est au premier niveau, et relier la deuxième borne d'entrée et la première borne de sortie lorsque le premier signal de commande est au deuxième niveau ; une première section de calcul (140A) configurée pour recevoir une valeur délivrée par le premier commutateur (SWA) et calculer le deuxième opérande ; et un premier additionneur (150A) configuré pour délivrer une somme du premier opérande et du deuxième opérande en tant que l'instruction de couple du premier moteur électrique (30), et

la deuxième section de commande de moteur électrique (MC3) incluant : une deuxième section de commande (110B) configurée pour recevoir l'instruction de tension de liaison et la tension de liaison et calculer et délivrer l'énergie de section de courant continu ; un deuxième commutateur (SWB) configuré pour relier une troisième borne d'entrée et une deuxième borne de sortie lorsque le deuxième signal de commande est au premier niveau et relier une quatrième borne d'entrée et la deuxième borne de sortie lorsque le deuxième signal de commande est au deuxième niveau, la sortie de la deuxième section de commande (110B) est entrée à la troisième borne d'entrée,

la sortie de la première section de commande (110A) est entrée à la quatrième borne d'entrée ; une deuxième section de calcul (140B) configurée pour recevoir une valeur délivrée par le deuxième commutateur (SWB) et calculer le quatrième opérande ; et un deuxième additionneur (150B) configuré pour délivrer une somme du troisième opérande et du quatrième opérande en tant que l'instruction de couple du deuxième moteur électrique (60).

2.  Système de véhicule selon la revendication 1, comprenant en outre une section de détermination d'arrêt de véhicule (150) configurée pour délivrer une instruction d'arrêt à un premier niveau lors de la réception d'un état de freinage fourni depuis un extérieur, l'instruction de couple d'essieu, et une vitesse de déplacement de véhicule, l'instruction de couple d'essieu est zéro, la vitesse de déplacement de véhicule est zéro, et le frein est appliqué, dans lequel la deuxième section de commande d'onduleur règle l'instruction de couple du deuxième moteur électrique à zéro et délivre l'instruction de porte lorsque la deuxième section de commande d'onduleur reçoit l'instruction d'arrêt et l'instruction d'arrêt est au premier niveau.

F I G. 1

F I G. 2

F I G. 3

EP 3 597 498 B1

110

DIRECT-CURRENT
VOLTAGE COMMAND
$V_{DCref}$(PARAMETER)

112

114

119

+

+

$K_P$

+

DIRECT CURRENT
SECTION ENERGY $P_{DC}$

−

DIRECT-CURRENT
VOLTAGE $V_{DC}$

+

$K_I$

$\dfrac{1}{S}$

116

118

F I G. 4

23

F I G. 5

EP 3 597 498 B1

F I G. 6

F I G. 7

EP 3 597 498 B1

**EP 3 597 498 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013060041 A
- JP 2007068301 A
- US 20150321664 A1
- JP 3050125 B